(19) Europäisches Patentamt / European Patent Office / Office européen des brevets

(11) **EP 2 988 586 B1**

(12) **EUROPÄISCHE PATENTSCHRIFT**

(45) Veröffentlichungstag und Bekanntmachung des Hinweises auf die Patenterteilung:
**30.11.2016 Patentblatt 2016/48**

(21) Anmeldenummer: **14748187.3**

(22) Anmeldetag: **01.08.2014**

(51) Int Cl.:
*A01C 7/04* *(2006.01)*     *A01C 7/10* *(2006.01)*
*A01C 7/08* *(2006.01)*

(86) Internationale Anmeldenummer:
**PCT/EP2014/066658**

(87) Internationale Veröffentlichungsnummer:
**WO 2015/015005 (05.02.2015 Gazette 2015/05)**

(54) **VERFAHREN ZUR DOSIERUNG VON KÖRNIGEM GUT UND DOSIERVORRICHTUNG FÜR KÖRNIGES GUT**

METHOD FOR DOSING GRANULAR MATERIAL AND DOSING DEVICE FOR GRANULAR MATERIAL

PROCÉDÉ ET DISPOSITIF DE DOSAGE DE MATÉRIEL GRANULAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.08.2013 DE 102013215183**

(43) Veröffentlichungstag der Anmeldung:
**02.03.2016 Patentblatt 2016/09**

(73) Patentinhaber: **Horsch Maschinen GmbH**
**92421 Schwandorf (DE)**

(72) Erfinder: **FUNCK, Gerald**
**69168 Schatthausen (DE)**

(74) Vertreter: **Benninger, Johannes**
**Benninger Patentanwaltskanzlei**
**Dr.-Leo-Ritter-Strasse 5**
**93049 Regensburg (DE)**

(56) Entgegenhaltungen:
**EP-A1- 0 963 690**     **EP-A2- 1 234 489**
**WO-A1-2004/004441**     **DE-A1- 3 001 926**

## Beschreibung

Die vorliegende Erfindung betrifft ein Verfahren zur Dosierung von körnigem Gut wie Samenkörner, Dünger o. dgl. sowie eine Dosiervorrichtung für solches körnige Gut mit den Merkmalen der unabhängigen Ansprüche. Das körnige Gut wird durch eine Luftströmung getragen und befördert und durch eine Zuführleitung in ein Dosieraggregat geleitet, wonach es durch eine sich tangential an das Dosieraggregat anschließende und zumindest abschnittsweise geradlinig oder leicht gekrümmt verlaufende Ausgangsleitung geleitet wird. Mit einer Regelungsanordnung wird in Abhängigkeit von einem erfassten Drehmoment eines elektromotorischen Antriebs für eine im Dosieraggregat rotierende Förder- oder Fächerscheibe dessen Drehzahl angepasst.

Aus dem Stand der Technik sind verschiedene Ansätze bekannt, die Drillsaat dahingehend zu verbessern, dass die Aussaat gleichmäßiger erfolgt. Das wichtigste Ziel, das hierbei verfolgt wird, besteht darin, die Kornabstände innerhalb der Reihe nicht zu stark variieren zu lassen, um sich damit einer Einzelkornsaat zumindest grob anzunähern.

Die EP 1 234 489 A2 offenbart eine Vorrichtung und ein Verfahren zum Verteilen von Granulaten wie Saatgut, Dünger o.dgl. Das von einem Luftstrom getragene Gut wird über eine Einlassöffnung in das Innere eines Dossieraggregats geführt. Im Inneren des Dosieraggregats wird das vom Luftstrom getragene Gut entlang dort angeordneter Stege zu einer Auslassöffnung geführt.

Die WO 2012/167372 A1 offenbart eine Verzögerungseinrichtung für körniges Material, das in einem Luftstrom getragen wird, und das mit einer furchenbildenden Ablagevorrichtung kombiniert ist, um das körnige Material in den Boden zu bringen. Die Verzögerungseinrichtung ist Teil eines landwirtschaftlichen Verteilungssystems, das mit Luft als Trägermedium arbeitet.

Aus der US 6 564 730 B2 geht ein Dosieraggregat einer landwirtschaftlichen Sävorrichtung hervor, bei dem das auszubringende körnige Gut bzw. die Samenkörner innerhalb des Dosieraggregats mittels einer konzentrisch innerhalb des Dosieraggregats rotierenden Förderscheibe mit Luftansaugöffnungen bewegt und gefördert werden.

Die EP 0 963 690 A1 offenbart schließlich einen Schleuderstreuer zum Verteilen von Streugut mit variabler Arbeitsbreite. Bei einer elektromotorisch mit regelbarer Drehzahl angetriebenen Verteilerscheibe wird auf Grundlage eines erfassten Drehmoments des elektromotorischen Antriebs die Antriebsdrehzahl erhöht oder reduziert.

Da sich die Einzelkornsaat bei Getreide aus wirtschaftlichen Gründen bisher nicht durchsetzen konnte, versucht das vorliegende, erfindungsgemäße Verfahren, die Korneinzelung bei der pneumatisch unterstützten Aussaat bei herkömmlichen Drillmaschinen soweit zu verbessern, dass von einer weitgehend äquidistanten Aussaat, d.h. von weitgehend konstanten Kornabständen gesprochen werden kann, die einer Einzelkornsaat zumindest sehr nahe kommt.

So sieht die vorliegende Erfindung ein Verfahren zur Dosierung von körnigem Gut wie Samenkörner, Dünger o. dgl. vor. Das Verfahren kann insbesondere innerhalb eines Verteil- oder Säaggregats einer Verteil- oder Sämaschine Anwendung finden. Bei dem Verfahren wird das durch eine Luftströmung getragene und beförderte körnige Gut durch eine Zuführleitung in ein Dosieraggregat geleitet, dort in einem ungefähr kreisbogenförmigen Verlauf geführt und tangential in eine sich an das Dosieraggregat anschließende Ausgangsleitung geleitet. Die durch die Ausgangsleitung geführte und das annähernd äquidistant beförderte körnige Gut tragende und fördernde Luftströmung wird innerhalb des Dosieraggregats mittels wenigstens einer ungefähr konzentrisch innerhalb des Dosieraggregats rotierenden, elektromotorisch mit regelbarer Drehzahl angetriebenen Förder- oder Fächerscheibe bewegt und/oder umgewälzt, ggf. auch beschleunigt. Außerdem wird auf Grundlage eines erfassten Drehmoments des elektromotorischen Antriebs der wenigstens einen rotierenden Förder- oder Fächerscheibe die Antriebsdrehzahl erhöht oder reduziert, bis das erfasste Drehmoment innerhalb eines definierbaren Sollbereichs liegt. Die Antriebsdrehzahl wird erhöht, wenn auch ein erhöhtes Drehmoment gemessen wird, das oberhalb des Sollbereichs liegt. Dagegen wird die Antriebsdrehzahl reduziert, wenn auch ein kleineres Drehmoment gemessen wird, das unterhalb des Sollbereichs liegt. Die Erhöhung oder Reduzierung der Drehzahl kann wahlweise kontinuierlich oder auch in vorgebbaren Sprüngen erfolgen. Die Ausgangsleitung, die vom Dosieraggregat mündet, kann wahlweise gestreckt oder auch zumindest abschnittsweise leicht gekrümmt verlaufen.

Eine Variante des Verfahrens sieht vor, dass zusätzlich die Sensorwerte eines in der Ausgangsleitung angeordneten Kornflusssensors ausgewertet und für die Regelung der Antriebsdrehzahl verwendet werden. Vorzugsweise können jedem einzelnen von mehreren Dosierern jeweils ein Antriebsmotor für dessen rotierende Förder- oder Fächerscheibe sowie eine entsprechende Einrichtung zur Drehmomenterfassung ggf. auch jeweils ein Kornflusssensor in der Ausgangsleitung zugeordnet sein. Diese Einrichtung zur Drehmomenterfassung ist normalerweise dadurch gebildet, dass die Leistungsaufnahme des Antriebsmotors erfasst wird, woraus das vom Motor aufzuwendende Drehmoment direkt abgeleitet werden kann.

Darüber hinaus kann es vorteilhaft sein, solche Kornflusssensoren auch in der Zuführleitung zum Dosieraggregat vorzusehen, so dass eine vereinfachte Steuerung auf Grundlage dieser Kornflusssensoren ermöglicht ist. Unter Umständen kann dadurch verhindert werden, dass einzelne Dosieraggregate mit einer zu großen Kornmenge beaufschlagt und dadurch verstopft werden, was durch einen Kornflusssensor in der Ausgangsleitung nicht mit derselben Zuverlässigkeit erkannt bzw. nur zu spät erkannt werden kann, wenn es bereits zu Stauungserscheinungen gekommen ist. Derartige Mengensensoren können bspw. optisch, induktiv oder mit Prallflächen arbeiten, die die jeweils durch die Leitungen passierenden Kornmengen erfassen können.

Bei den Dosiervorrichtungen wird jeweils das annähernd gleichmäßig dosierte und/oder äquidistant beförderte körnige Gut von der das Dosieraggregat weitgehend vollständig durch die Ausgangsleitung verlassenden abgeleiteten Luftströmung getragen. Das körnige Gut wird innerhalb der einzelnen Dosieraggregate jeweils mit mechanischer Unterstützung und/oder unter zumindest teilweiser Separierung von der tragenden Luftströmung an einer Innenmantelfläche oder Innenwandung geführt, wobei den sich der Ausgangsleitung nähernden einzelnen Körnern in etwa gleiche Abstände voneinander aufgeprägt werden. Dabei wird die das körnige Gut tragende Luftströmung ununterbrochen von der Zuführleitung, durch das Dosieraggregat und bis zur Ausgangsleitung geführt. Normalerweise wird die das körnige Gut tragende und fördernde Luftströmung ununterbrochen von der Zuführleitung, durch das Dosieraggregat und bis zur Ausgangsleitung geführt, so dass eine Beeinflussung bzw. Variation der Antriebsdrehzahl der rotierenden Förder- oder Fächerscheibe eine entsprechende Variation des Korndurchsatzes erreicht werden kann.

Da die durch die Ausgangsleitung geführte und das annähernd äquidistant beförderte körnige Gut tragende und fördernde Luftströmung innerhalb des Dosieraggregats mittels der elektromotorisch angetriebenen Förder- oder Fächerscheibe bewegt, umgewälzt und/oder beschleunigt wird, kann sowohl das Antriebsmoment für diese Scheibenantriebe erfasst als auch deren Drehzahl angepasst werden, so dass der Kornfluss weitestgehend gleichmäßig erfolgen kann und die Körner mit annähernd gleichen Abständen abgegeben werden können. Typischerweise tritt die im Dosieraggregat beschleunigte Luftströmung mit einer Geschwindigkeit in die Ausgangsleitung ein und aus dieser hinaus, die größer ist als eine Zuführgeschwindigkeit, mit der die Luftströmung in die Zuführleitung eintritt.

Wie bereits definiert, kann das körnige Gut innerhalb des Dosieraggregats mit mechanischer Unterstützung und/oder unter zumindest teilweiser Separierung von der tragenden Luftströmung an einer Innenmantelfläche oder Innenwandung geführt werden, wobei den sich der Ausgangsleitung nähernden einzelnen Körnern typischerweise zumindest solange in etwa gleiche Abstände voneinander aufgeprägt werden, bis eine Variation der Antriebsdrehzahl der Förder- oder Fächerscheibe erfolgt. Mit Hilfe der rotierenden Förder- oder Fächerscheibe kann die durch die Ausgangsleitung geführte und das annähernd äquidistant beförderte körnige Gut tragende und fördernde Luftströmung innerhalb des Dosieraggregats beschleunigt werden, so dass die im Dosieraggregat beförderte und/oder beschleunigte Luftströmung je nach Auslegung des Dosieraggregats mit einer Geschwindigkeit in die Ausgangsleitung eintritt und aus dieser hinaustritt, die größer ist als eine Zuführgeschwindigkeit, mit der die Luftströmung in die Zuführleitung eintritt. Diese Beschleunigung der kornfördernden Luft kann jedoch durch die verschiedenen Leitungsquerschnitte zusätzlich beeinflusst werden, da die Ausgangsleitung normalerweise einen kleineren Querschnitt aufweist als die zuführende Leitung bzw. die Saatleitung, die bspw. von einem zentralen Verteilerkopf zu den Säscharen mündet. Das Korn wird in der Dosiervorrichtung beschleunigt und ist hierbei bereits von der Luftströmung umgeben, welche die Körner bis in das Fallrohr und zur Säschar begleitet und trägt.

Die Erfindung betrifft zudem eine regelbare Anordnung zur Dosierung von körnigem Gut wie Samenkörner, Dünger o. dgl., insbesondere innerhalb eines Verteil- oder Säaggregats einer Verteil- oder Sämaschine, bei dem das durch eine Luftströmung getragene und beförderte körnige Gut durch eine Zuführleitung in ein Dosieraggregat geleitet, dort in einem ungefähr kreisbogenförmigen Verlauf geführt und tangential in eine sich an das Dosieraggregat anschließende Ausgangsleitung geleitet ist, mit wenigstens einer ungefähr konzentrisch innerhalb des Dosieraggregats rotierenden, elektromotorisch mit regelbarer Drehzahl angetriebenen Förderoder Fächerscheibe zur Bewegung, Umwälzung und/oder Beschleunigung der durch die Ausgangsleitung geführten und das annähernd äquidistant beförderte körnige Gut tragenden und fördernden Luftströmung innerhalb des Dosieraggregats, und mit Einrichtungen zur Erfassung eines Drehmoments des elektromotorischen Antriebs für die wenigstens eine rotierende Förder- oder Fächerscheibe und zur Variation der Antriebsdrehzahl bei einem erfassten Drehmoment, das außerhalb eines definierbaren Sollbereichs liegt. Die Anordnung weist Einrichtungen zur Erfassung von Sensorwerten eines in der Ausgangsleitung angeordneten Kornflusssensors und zur Auswertung für die Regelung der Antriebsdrehzahl auf.

Generell wird die Ausbringmenge an körnigem Gut bzw. an Saatgut mit Hilfe des Füllgrades des Dosierers geregelt. Je höher der Füllgrad des Dosierers mit Saatgut ist, desto mehr Körner werden vereinzelt und ausgebracht. Da jeder Dosierer einen separaten Antriebsmotor besitzt, mit dem der Dosierer bzw. die Fächerscheibe im Dosierer angetrieben wird, kann das Antriebsmoment dieses Antriebsmotors erfasst und zur Regelung der Ausbringmenge verwendet werden. Da das Antriebsmoment des Motors mit dem Füllgrad des Dosierers steigt, kann das erfasste Drehmoment als Messgröße für die Ermittlung und Regelung des Füllgrades verwendet werden. Auf diese Weise kann die ausgebrachte Menge geregelt werden; d.h. bei einer bestimmten Ausbringmenge darf das Moment des Antriebsmotors nur einen bestimmten Wert aufweisen.

Wie oben erwähnt, wird das aktuelle Antriebsmoment des elektrischen Antriebsmotors insbesondere dadurch bestimmt bzw. hergeleitet, dass dessen elektrische Stromaufnahme gemessen wird, da diese einen unmittelbaren Rückschluss auf die Motorwiderstände und damit auf das aufzuwendende Motormoment zulässt.

Das Ziel einer besseren Vergleichmäßigung des ausgebrachten Saatgutes kann durch eine Anpassung der Motordrehzahl auf Grundlage des erfassten Antriebsmoments erreicht werden, wodurch stärkere Schwankungen in der Ausbringmenge eines einzelnen Dosierers in gewünschter Weise ausgeglichen bzw. unterdrückt werden können. Zwar können auf diese Weise die Ausbringmengen zwischen den einzelnen Reihen weiterhin variieren, doch wird das Ziel der optimierten und möglichst nicht schwankenden Kornabstände innerhalb der Reihe erreicht.

Die Versorgung der Dosierer erfolgt über die bereits vorhandene Luftversorgung einer pneumatischen Sämaschine, die typischerweise einen zentralen Verteilerkopf mit flexiblen Saatleitungen zu den einzelnen Säscharen aufweist. Mit diesem Pneumatiksystem werden alle Schare und Dosierer möglichst gleichmäßig mit Saatgut versorgt. Innerhalb dieser flexiblen Saatleitungen sind die einzelnen Dosierer platziert, typischerweise nah an den Säscharen, da die Fallrohre zu den Säscharen normalerweise die Ausgangsleitungen der Dosierer sind.

Zusätzlich können in den Fallrohren noch Kornsensoren zur Überwachung der vom Dosierer abgegebenen Kornmengen angeordnet sein, so dass diese Sensorwerte zur weiteren Regelung der Antriebsmotoren verwendet werden können.

Das erfindungsgemäße Regelungsverfahren ist insbesondere Bestandteil eines Verfahrens zur Dosierung von körnigem Gut wie Samenkörner, Dünger o. dgl. Dieses Verfahren kann insbesondere innerhalb eines Verteil- oder Säaggregats einer Verteil oder Sämaschine ausgeführt werden. Bei dem Verfahren ist vorgesehen, dass das durch eine Luftströmung getragene und beförderte körnige Gut durch eine zumindest abschnittsweise geradlinig verlaufende Zuführleitung tangential in ein Dosieraggregat geleitet, dort in einem ungefähr kreisbogenförmigen Verlauf mit einem Bogenwinkel von wenigstens 180 Grad, vorzugsweise von 270 Grad oder mehr unter zumindest teilweiser Separierung des körnigen Guts von der tragenden und fördernden Luftströmung geführt und tangential in eine sich an das Dosieraggregat anschließende und zumindest abschnittsweise geradlinig oder ggf. auch leicht gekrümmt verlaufende Ausgangsleitung geleitet wird, wobei das dort annähernd gleichmäßig dosierte und/oder äquidistant beförderte körnige Gut von der das Dosieraggregat weitgehend vollständig durch die Ausgangsleitung verlassenden abgeleiteten Luftströmung getragen wird. Das körnige Gut oder Saatgut sowie die das Gut tragende Luftströmung kann in dem vorzugsweise scheibenförmig aufgebauten Dosieraggregat bspw. eine komplette Umdrehung ausführen, bevor es in die Ausgangsleitung mündet. So kann bei dem Verfahren vorgesehen sein, dass die tangential in das Dosieraggregat geleitete Luftströmung dort in einem ungefähr kreisbogenförmigen Verlauf mit einem Bogenwinkel von ca. 330 bis 390 Grad oder auch mehr geführt und tangential in die Ausgangsleitung geleitet wird. Da der Luftstrom an keiner Stelle unterbrochen wird, sondern ununterbrochen und in weitgehend gleichmäßig gekrümmtem Verlauf (mit tangentialen Übergängen) durch das Dosieraggregat geleitet wird, kann die auf diese Weise stark beruhigte und vergleichmäßigte Luftströmung dazu genutzt werden, im Zusammenhang mit lenkenden, leitenden und/oder separierenden Wirkungselementen innerhalb des Dosieraggregats, die Kornabstände weitgehend zu vergleichmäßigen, so dass die Körner, welche durch die Ausgangsleitung geführt werden, sowohl weitgehend gleiche Korngeschwindigkeiten als auch weitgehend gleiche Abstände voneinander aufweisen.

Wahlweise kann das körnige Gut innerhalb des Dosieraggregats mit mechanischer Unterstützung und/oder unter zumindest teilweiser Separierung von der tragenden Luftströmung an einer Innenmantelfläche oder Innenwandung geführt werden, wobei den sich der Ausgangsleitung nähernden einzelnen Körnern in etwa gleiche Abstände voneinander aufgeprägt werden. In diesem Zusammenhang kann vorgesehen sein, dass die Luftströmung in einem inneren Bereich des Dosieraggregats und zumindest teilweise von den kornführenden Bereichen der Innenmantelfläche oder Innenwandung beabstandet geführt wird. Wesentlich für den von der Erfindung erzielten Effekt ist es dabei, dass die das körnige Gut tragende und fördernde Luftströmung ununterbrochen von der Zuführleitung, durch das Dosieraggregat und bis zur Ausgangsleitung geführt wird.

Dadurch, dass die durch die Ausgangsleitung geführte und das annähernd äquidistant beförderte körnige Gut tragende und fördernde Luftströmung innerhalb des Dosieraggregats beschleunigt wird, was bspw. durch eine rotierende Förder- und/oder Fächerscheibe erfolgen kann, kann auch die hierfür aufzubringende Leistung bzw. das hierfür aufzuwendende Drehmoment erfasst werden, was wiederum einen Rückschluss auf die Füllung des Dosieraggregats zulässt. Auf diese Weise kann erreicht werden, dass die im Dosieraggregat beschleunigte Luftströmung mit einer Geschwindigkeit in die Ausgangsleitung eintritt und aus dieser an einer Mündung hinaustritt, die größer ist als eine Zuführgeschwindigkeit, mit der die Luftströmung in die Zuführleitung eintritt. Die Drehmomenterfassung und daraus abgeleitete Drehzahlregelung der Förder- oder Fächerscheibe dient der Vergleichmäßigung der Saatgut- oder Kornabgabe, die zur Säschar geleitet wird.

Bei dem Kornvereinzelungsverfahren wird das in einem äußeren Bereich der gekrümmten Ausgangsleitung annähernd äquidistant und/oder gleichmäßig dosierte und beförderte körnige Gut von der das Dosieraggregat weitgehend vollständig durch die Ausgangsleitung verlassenden abgeleiteten Luftströmung getragen. Vorzugsweise wird weitgehend der gesamte Luftstrom im Dosieraggregat geführt und durch dieses hindurch geleitet. Weiterhin kann vorgesehen sein, dass sich die Kreisbögen der Ausgangsleitung und der Innenmantelfläche des Dosieraggregats tangential berühren und die Luft- und Kornführungsverläufe stufen- bzw. nahtlos ineinander übergehen. Wahlweise ist es möglich, dass sich ein Krümmungsradius der Ausgangsleitung mit steigendem Abstand vom Dosieraggregat stetig oder unstetig öffnet. Alternativ hierzu kann der Krümmungsradius der Ausgangsleitung zumindest in einem an das Dosieraggregat grenzenden Abschnitt annähernd konstant sein. Mit Hilfe des erfindungsgemäßen Verfahrens kann das auszubringende körnige Gut weitgehend kollisionsfrei und/oder verwirbelungsfrei in der Ausgangsleitung geführt werden, da es in seiner Bewegungsbahn in etwa dem Verlauf der Ausgangsleitung folgt. Vorteilhaft für einen weitgehend kollisionsfreien Bewegungsverlauf der Körner innerhalb der Ausgangsleitung ist ein zunehmender Geschwindigkeitsgradient der in der Ausgangsleitung geführten Luftströmung vom Innen- zum Außenradius. D.h., die dem Außenradius nähere Luft, welche die Körner trägt, strömt schneller als die am Innenradius geführte Luft.

Wenn im vorliegenden Zusammenhang von einer weitgehend kollisionsfreien Kornförderung die Rede ist, so sind damit Kollisionen der Körner untereinander gemeint, die mit Hilfe des erfindungsgemäßen Verfahrens sowie durch den Betrieb der erfindungsgemäßen Dosiervorrichtung weitestgehend verhindert werden können. Eine annähernd verwirbelungsfreie Kornförderung meint dementsprechend einen dem Leitungsverlauf der Zuführ- und Ausgangsleitung sowie der kreisförmigen Bewegungsbahn entlang des Gehäuses der Dosiervorrichtung ungefähr folgenden Korntransport.

Die beschriebene Dosiervorrichtung eignet sich insbesondere zur Platzierung in kornführenden Leitungen, insbesondere in Saatleitungen einer an sich bekannten Sämaschine, insbesondere einer solchen, die pneumatisch fördert. In jeder Saatleitung kann eine solche Dosiervorrichtung angeordnet sein, wo sie für eine Sicherstellung einer annähernd vereinzelten Saatgutverteilung sorgen kann. Damit handelt es sich bei der Dosiervorrichtung um ein Anbaugerät, das für die Ergänzung einer existierenden Sämaschine geeignet ist und diese zu einer Einzelkornsämaschine macht.

Die Luftströmung trägt und befördert das körnige Gut während seines gesamten Transports vom Kornvorrat bis zur Säschar, wobei die Luftströmung innerhalb des Dosieraggregats in einem ungefähr kreisbogenförmigen Verlauf geführt wird und tangential in eine sich an das Dosieraggregat anschließende und zumindest abschnittsweise leicht gekrümmt verlaufende Ausgangsleitung geleitet wird. Dabei kann vorgesehen sein, dass sich die Kreisbögen der Ausgangsleitung und der Innenmantelfläche des Dosieraggregats tangential berühren und die Luft- und Kornführungsverläufe stufen-/nahtlos ineinander übergehen. Außerdem ist ein Krümmungsradius der Ausgangsleitung zumindest in einem an das Dosieraggregat grenzenden Abschnitt annähernd konstant.

Wahlweise kann vorgesehen sein, dass sich der Krümmungsradius der Ausgangsleitung mit steigendem Abstand vom Dosieraggregat stetig oder unstetig öffnet.

Aufgrund der mit der Erfindung gelieferten Regelungsmöglichkeit der Längsverteilung von Saatgut bzw. des Kornabstandes während eines Sävorganges sieht die vorliegende Erfindung als weiteren Aspekt eine Ausbringvorrichtung für körniges Gut in wenigstens zwei, insbesondere in einer Vielzahl von nebeneinander befindlichen Reihen vor, die insbesondere durch eine mehrreihige Sävorrichtung gebildet sein kann. Diese von der vorliegenden Erfindung mitumfasste Ausbring- oder Sävorrichtung weist mehrere, insbesondere eine Vielzahl von Reihen oder Säreihen mit jeweils einem Säaggregat und/oder einer Säschar o. dgl. Vorrichtung zum Einbringen der Körner oder des Saatgutes in eine definierbare Ablagetiefe im Ackerboden auf, wobei diese Säaggregate und/oder Säschare über jeweils separate Zuführleitungen von einem Zentraltank oder ggf. von mehreren Kornvorratsbehältern mit Körnern oder Saatgut versorgt werden. Außerdem ist jeder dieser Säaggregate und/oder Säschare mit jeweils einer Dosiervorrichtung für körniges Gut entsprechend der Definition einer der oben beschriebenen Ausführungsvarianten bzw. entsprechend einem der Ansprüche 14 oder 15 ausgestattet, welche Dosiervorrichtungen jeweils signaltechnisch mit einer zentralen Steuerungs- und/oder Regelungseinheit verbunden sind, die nicht nur die in den Dosiervorrichtungen erfassten Drehmomente und/oder Drehzahlwerte für die Antriebsmotoren der rotierenden Fächer- oder Förderscheiben erfasst und verarbeitet, sondern auch je nach Bedarf und/oder nach vorgegebenen Kornabständen unter Berücksichtigung weiterer Ausbringparameter wie bspw. einer Fahrgeschwindigkeit deren Umdrehungszahlen regelt und anpasst. Wahlweise können zusätzlich Sensorwerte von optionalen Durchflusssensoren ausgewertet werden, die sich bspw. in den Dosiervorrichtungen nachgeordneten und/oder vorgeordneten Abschnitten der Kornleitungen befinden, und die sowohl die passierenden Körner je Zeitintervall als auch die Kornabstände erfassen können, bspw. mittels optischer, induktiver oder auch mechanischer Erfassung. Eine mechanische Erfassung kann z.B. mittels sog. Prallsensoren erfolgen, die bspw. eine piezoelektrisch arbeitende Prallfläche aufweisen, an der die auftreffenden Körner umgelenkt und durch den mechanischen Stoß erfasst werden können.

Durch entsprechende Konfiguration der Steuer- und/oder Regelungseinheit kann somit eine komplette Sä- oder Ausbringvorrichtung für körniges Gut bzw. eine vielreihige Sämaschine, die mit einer Vielzahl von erfindungsgemäßen Dosiervorrichtungen ausgestattet ist, hinsichtlich ihrer Kornmenge je Saatreihe und insbesondere auch hinsichtlich der Längsverteilung der Körner oder Saatkörner variabel gesteuert bzw. geregelt werden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

Fig. 1 zeigt eine schematische Darstellung einer pneumatisch arbeitenden Sämaschine mit volumendosiertem Saatgut, das über einen Zentralverteiler zu einzelnen Saatleitungen mit mündungsseitig daran angeordneten Säscharen geführt wird.

Fig. 2 zeigt in einer schematischen Darstellung den grundsätzlichen Aufbau einer erfindungsgemäßen Dosiervorrichtung, die innerhalb einer Saatleitung einer Sämaschine gemäß Fig. 1 angeordnet ist.

Fig. 3 zeigt eine schematische Darstellung einer Ausführungsvariante einer Sämaschine mit mehreren Säaggregaten, die jeweils mit Dosiervorrichtungen gemäß Fig. 2 ausgestattet sind.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

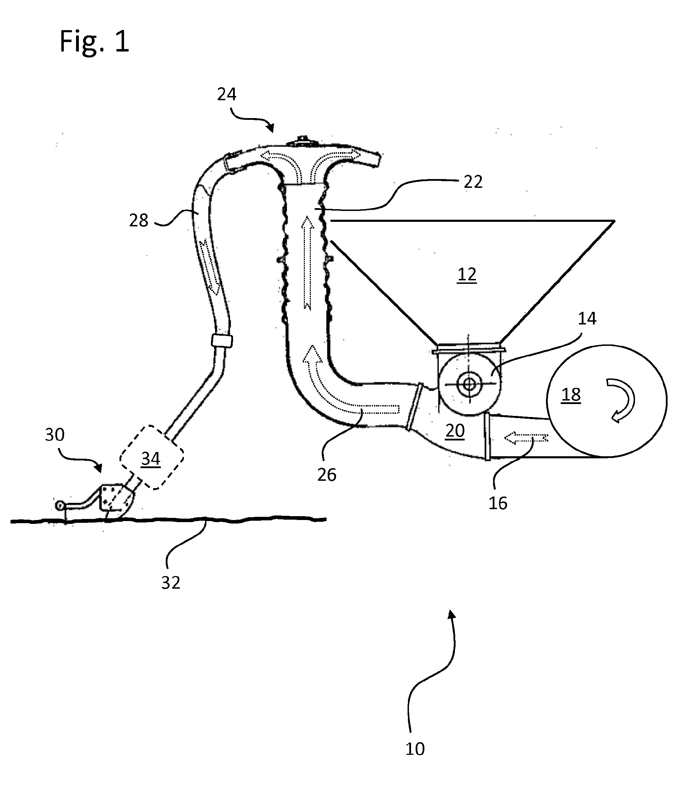

Die schematische Darstellung der Fig. 1 zeigt eine pneumatisch arbeitende Sämaschine 10 mit volumendosiertem Saatgut, das über einen Zentralverteiler zu einzelnen Saatleitungen mit mündungsseitig daran angeordneten Säscharen geführt wird. Die in ihrem grundlegenden Aufbau aus dem Stand der Technik bekannte Sämaschine 10 weist typischerweise einen trichterförmigen Vorratsbehälter 12 mit körnigem Gut, insbesondere mit Saatgut auf, an dessen Unterseite sich eine Dosiereinrichtung 14 befindet, die das körnige Gut bzw. das Saatgut in einen Luftstrom 16 dosiert, der von einem Gebläse 18 erzeugt und in eine Luftleitung 20 befördert wird, die zu einem senkrecht angeordneten Steigrohr 22 führt. An einer Oberseite des Steigrohrs 22 - dies kann bspw. ein sog. Wellrohr o. dgl. sein - befindet sich ein Zentralverteiler 24, der den körnertragenden Luftstrom 26 möglichst gleichmäßig zu einer Vielzahl von Saatleitungen 28 verteilt. Die einzelnen Saatleitungen 28, von denen der besseren Übersichtlichkeit halber nur eine dargestellt ist, münden schließlich jeweils an Säscharen 30, mit denen das Saatgut in den Ackerboden 32 eingebracht wird. Die Zudosierung des vom Vorratsbehälter 12 in den Luftstrom 16 abgegebenen Saatgutes oder körnigen Gutes kann wahlweise nach dem Venturi-Prinzip oder auch durch Unterstützung des unter Druck stehenden, im geschlossenen Drucktank 12 befindlichen Saatgutes erfolgen.

Wie es die Fig. 1 erkennen lässt, befindet sich innerhalb der Saatleitung 28, typischerweise in unmittelbarer Nähe zur Säschar 30, eine erfindungsgemäße Dosiervorrichtung 34, die dafür sorgt, dass die Säschar 30 mit körnigem Gut bzw. mit Saatgut beaufschlagt wird, das in annähernd gleichen Kornabständen und mit weitgehend jeweils gleichen Fördergeschwindigkeiten in den Ackerboden 32 abgegeben wird. Da bei einer realen Sämaschine eine Vielzahl solcher paralleler Säscharen 30 vorgesehen sind (z.B. vierundzwanzig, zweiunddreißig oder mehr), die jeweils mit separaten Saatleitungen 28 verbunden und von diesen versorgt sind, ist auch eine entsprechende Anzahl von erfindungsgemäßen, jeweils gleichartig aufgebauten Dosiervorrichtungen 34 vorgesehen, da jede einzelne Saatleitung 28 eine solche Dosiervorrichtung 34 aufweist.

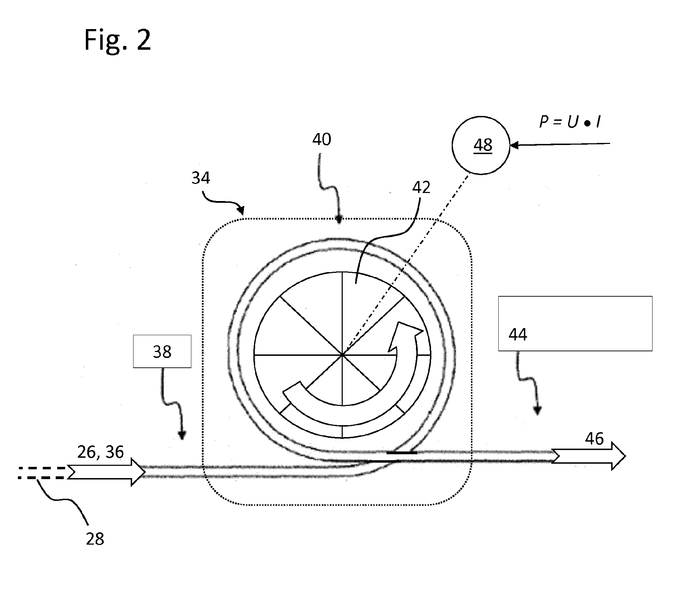

Die Fig. 2 zeigt in einer schematischen Darstellung den grundsätzlichen Aufbau einer erfindungsgemäßen Dosiervorrichtung 34, die innerhalb einer Saatleitung 28 einer Sämaschine 10 gemäß Fig. 1 angeordnet ist. So strömt der körnertragende Luftstrom 26 als Zuluft 36 mit einer ersten Geschwindigkeit $v_1$ durch eine innerhalb der Saatleitung 28 angeordneten Zuführleitung 38 tangential in die Dosiervorrichtung 34 ein, wobei die Zuluft 36 mittels einer im Dosieraggregat 40 der Dosiervorrichtung 34 rotierenden Förder- und/oder Fächerscheibe 42 beschleunigt werden kann. Gleichzeitig werden dadurch die in der Zuluft 36 getragenen und beförderten Körner (z.B. Saatkörner) in einer Weise sortiert und in eine Ordnung zueinander gebracht, dass sie beim tangentialen Austritt aus dem Dosieraggregat 40 in eine Ausgangsleitung 44 ungefähr gleiche Abstände voneinander aufweisen. Die im Dosieraggregat 40 beschleunigte Förderluft 46 bzw. körnertragende Luftströmung tritt aus der Ausgangsleitung 44 mit höherer Geschwindigkeit ($v_2$) aus als sie in die Zuführleitung 38 eintritt, so dass gilt:

$$v_2 > v_1.$$

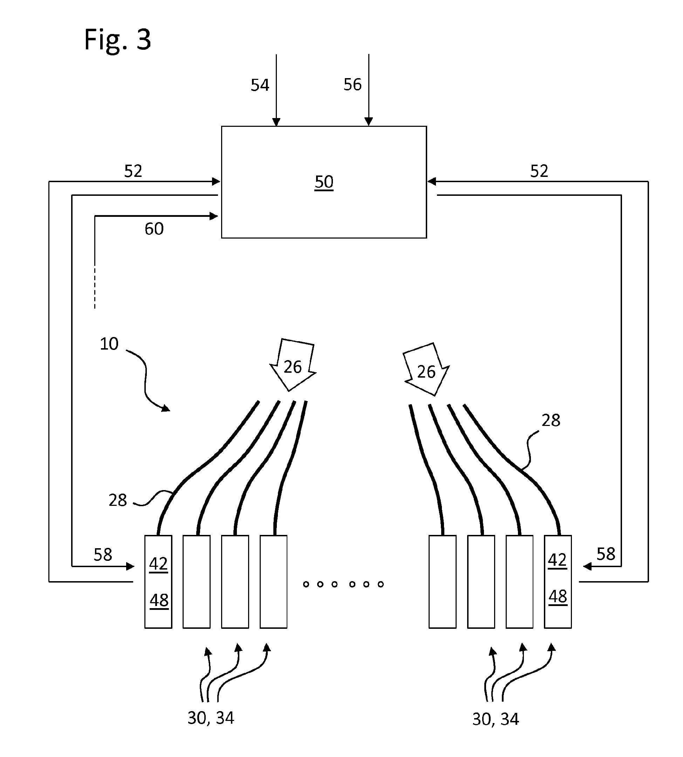

Sowohl die Zuführleitung 38 als auch die Ausgangsleitung 44 münden jeweils annähernd tangential am Dosieraggregat 40 der Dosiervorrichtung 34, in dem die Luft mitsamt den getragenen und beförderten Körnern eine Umlenkung von vorzugsweise mindestens 330 Grad, typischerweise von ca. 360 Grad erfährt. Die Ausgangsleitung 44 kann anschließend in eine Saatleitung (vgl. Fig. 3) münden, die zur Säschar 30 führt (vgl. Fig. 1), mit der die Körner im Ackerboden 32 abgelegt werden. Wahlweise kann die Ausgangsleitung 44 eine sichelförmige Krümmung aufweisen, welche die Krümmung des Luftführungsverlaufs innerhalb des Dosieraggregats 40 aufnimmt und mit größerem Krümmungsradius fortsetzt.

Wie es die schematische Darstellung der Fig. 2 erkennen lässt, ist der Luftstrom von der Versorgung (Gebläse 18) bis zur Abgabe am Säaschar 30 (vgl. Fig. 1) ununterbrochen geführt, so dass der komplette Luftstrom das gesamte System durchläuft, bevor er an der Säschar 30 mitsamt den transportierten und weitgehend äquidistant abgegebenen Körnern austritt.

Die Förder- und/oder Fächerscheibe 42 im Dosieraggregat 40 elektomotorisch angetrieben, was über den schematisch angedeuteten elektrischen Antriebsmotor 48 erfolgt. Innerhalb des Dosieraggregats 40 werden die Körner normalerweise vom Luftstrom - zumindest teilweise - getrennt, wobei auch die außen geführten Körner eine kreisbogenförmige Bewegung beschreiben, wenn sie an der Innenmantelfläche des Dosierers 40 entlang geführt werden. Der Luftstrom wird normalerweise auf kleinerem Radius, im Innenbereich des Dosierers 40 geführt und kann dort ggf. verwirbeln, bevor er die in die Ausgangsleitung 44 ausgetragenen, zuvor vom Dosieraggregat 40 beschleunigten und permanent von Transportluft umströmten Körner an deren tangentialer Mündung wieder mitreißt. Die durch die Ausgangsleitung 44 mit der austretenden Luft 46 beförderten Körner eignen sich hervorragend zur exakten Ablage im Boden 32, da ihre Geschwindigkeit und Position sehr genau steuerbar ist. Das gezeigte Verfahren sorgt innerhalb des Dosierers 34 bzw. 40 für die gewünschte Kornbeschleunigung und kann auf weitere Hilfsmittel wie eine zusätzliche Luftversorgung weitgehend verzichten.

Das Saatgut bewegt sich zunächst mit konstanter Geschwindigkeit ($v_1$), die durch die Luftgeschwindigkeit der fördernden Luft 26 vorgegeben ist. Diese Förderluft 26 stammt von der zentralen Luftversorgung der pneumatischen Sämaschine 10, bei der die Körner dem Luftstrom 16 zudosiert werden, der vom Gebläse 18 stammt (Venturi-Prinzip oder Drucktank-Prinzip). In der Dosiervorrichtung 34 wird die Luftgeschwindigkeit durch die Rotation der mechanisch wirkenden Förder-/Fächerscheibe 42 erhöht, wodurch sich die aus der Ausgangsleitung 44 tretende Luftgeschwindigkeit ($v_2$) erhöht und damit die Fördergeschwindigkeit für die Körner. Diese werden anschließend annähernd ungebremst an das Saatleitungsrohr abgegeben.

Eine Leistungsaufnahme des elektrischen Antriebsmotors 48 wird erfasst, was bei gegebener Versorgungsspannung U bspw. durch Messung der Stromaufnahme I erfolgt, so dass aus dem bekannten Produkt

$$P = U \bullet I$$

die Leistungsaufnahme P hergeleitet bzw. errechnet werden kann. Die die Leistungsaufnahme P bei dem erfindungsgemäßen Dosieraggregat 40 einen direkten Zusammenhang mit dem vom Motor aufzubringenden Drehmoment liefert, kann der Kornfluss innerhalb des Dosieraggregats 40 dadurch verstetigt werden, dass auf Grundlage eines erfassten Drehmoments des elektromotorischen Antriebs 40 für die rotierende Förder- oder Fächerscheibe 42 die Antriebsdrehzahl erhöht oder reduziert wird, bis das erfasste Drehmoment innerhalb eines definierbaren Sollbereichs liegt. Die Antriebsdrehzahl wird erhöht, wenn auch ein erhöhtes Drehmoment gemessen wird, das oberhalb des Sollbereichs liegt. Dagegen wird die Antriebsdrehzahl reduziert, wenn auch ein kleineres Drehmoment gemessen wird, das unterhalb des Sollbereichs liegt. Die Erhöhung oder Reduzierung der Drehzahl kann wahlweise kontinuierlich oder auch in vorgebbaren Sprüngen erfolgen.

Auf die beschriebene Weise kann die Ausbringmenge an körnigem Gut bzw. an Saatgut mit Hilfe des Füllgrades der Dosierervorrichtung 34 geregelt werden. Je höher der Füllgrad des Dosierers 34 mit Saatgut ist, desto mehr Körner werden vereinzelt und ausgebracht. Da jeder Dosierer 34 bzw. jedes Dosieraggregat 40 einen separaten Antriebsmotor 48 besitzt, mit dem die Fächerscheibe 42 im Dosieraggregat 40 angetrieben wird, kann das Antriebsmoment dieses Antriebsmotors 48 erfasst und zur Regelung der Ausbringmenge verwendet werden. Da das Antriebsmoment des Motors 48 mit dem Füllgrad des Dosierers 34 steigt, kann das erfasste Drehmoment als Messgröße für die Ermittlung und Regelung des Füllgrades verwendet werden. Auf diese Weise kann die ausgebrachte Menge geregelt werden; d.h. bei einer bestimmten Ausbringmenge darf das Moment des Antriebsmotors 48 nur einen bestimmten Wert aufweisen. Das Ziel einer besseren Vergleichmäßigung des ausgebrachten Saatgutes kann durch eine Anpassung der Motordrehzahl auf Grundlage des erfassten Antriebsmoments erreicht werden, wodurch stärkere Schwankungen in der Ausbringmenge eines einzelnen Dosierers in gewünschter Weise ausgeglichen bzw. unterdrückt werden können. Zwar können auf diese Weise die Ausbringmengen zwischen den einzelnen Reihen weiterhin variieren, doch wird das Ziel der optimierten und möglichst nicht schwankenden Kornabstände innerhalb der Reihe erreicht.

Wahlweise können in den Fallrohren noch Kornsensoren (nicht dargestellt) zur Überwachung der vom Dosierer abgegebenen Kornmengen angeordnet sein, so dass diese Sensorwerte zur weiteren Regelung der Antriebsmotoren 48 verwendet werden können.

Die Fig. 3 zeigt in einer weiteren schematischen Darstellung eine Ausführungsvariante einer Sämaschine 10, die mit einer Vielzahl von nebeneinander angeordneten Säschare 30 ausgestattet ist, denen jeweils Dosiervorrichtungen 34 gemäß Fig. 1 bzw. Fig. 2 vorgeordnet sind. Die Konfiguration der Säschare 30 bzw. Säaggregate und der Dosiervorrichtungen 34 ist für die nachfolgende Erläuterung der Ausführungsvariante der Erfindung ohne Belang und kann bspw. der Anordnung gemäß Fig. 1 entsprechen. Die zu den Säaggregaten bzw. den Dosiervorrichtungen 34 führenden Saatleitungen 28, durch die der körnertragende Luftstrom 26 zu den Dosiervorrichtungen 34 geleitet wird, sind in Fig. 3 nur angedeutet. Die Saatleitungen 28 können von einem zentralen Vorratsbehälter oder auch von mehreren Vorratstanks mit darin befindlichem Saatgut gespeist werden (vgl. Fig. 1).

Gemäß der in Fig. 3 gezeigten Ausführungsvariante sind die Dosiervorrichtungen 34 jeweils signaltechnisch mit einer zentralen Steuerungs- und/oder Regelungseinheit 50 verbunden, die einerseits die in den Dosiervorrichtungen 34 erfassten Drehmomente 52 und/oder Drehzahlwerte für die Antriebsmotoren 48 der rotierenden Fächer- oder Förderscheiben 42 (vgl. Fig. 2) erfasst und verarbeitet. Darüber hinaus können je nach Bedarf und/oder nach vorgegebenen Kornabständen weitere Ausbringparameter wie bspw. eine Fahrgeschwindigkeit 54 erfasst werden. In Abhängigkeit von den erfassten Werten 52, 54 und unter Berücksichtigung von Sollwerten 56 für die Kornabstände bzw. die jeweilige Längsverteilung der ausgebrachten Körner in der Furche werden die Drehzahlen der Antriebsmotoren 48 in der gewünschten Weise geregelt und anpasst. Die Regelvorgaben für die Antriebsmotoren 48 in den Dosiervorrichtungen 34 sind durch die Bezugsziffern 58 bezeichnet. Die Sollwerte 56 werden bspw. aus Kennwerten und/oder aus Vorgaben des Benutzers abgeleitet, der diese manuell eingeben kann.

Wahlweise können zusätzlich Sensorwerte 60 von optionalen Durchflusssensoren (nicht gezeigt) ausgewertet werden, die sich bspw. in den Dosiervorrichtungen 34 nachgeordneten Abschnitten der Kornleitungen befinden, und die sowohl die passierenden Körner je Zeitintervall als auch die Kornabstände erfassen können, bspw. mittels optischer, induktiver oder auch mechanischer Erfassung. Durch entsprechende Konfiguration der Steuer- und/oder Regelungseinheit 50 kann somit eine komplette, vielreihige Sämaschine 10, die mit einer Vielzahl von steuer- und regelbaren Dosiervorrichtungen 34 ausgestattet ist, hinsichtlich ihrer Kornmenge je Saatreihe und insbesondere auch hinsichtlich der Längsverteilung der Körner oder Saatkörner variabel gesteuert bzw. geregelt werden.

Darüber hinaus kann es vorteilhaft sein, solche Durchfluss- oder Kornflusssensoren auch in den jeweiligen Zuführ- oder Saatleitungen 28 zum Dosieraggregat 34 vorzusehen, so dass eine vereinfachte Steuerung auf Grundlage dieser Kornflusssensoren ermöglicht ist. Unter Umständen kann dadurch verhindert werden, dass einzelne Dosieraggregate 34 mit einer zu großen Kornmenge beaufschlagt und dadurch verstopft werden, was durch einen Kornflusssensor in der Ausgangsleitung 44 je nach Messbedingungen nicht mit derselben Zuverlässigkeit erkannt werden kann. Derartige Mengensensoren können bspw. optisch, induktiv oder mit Prallflächen arbeiten, die die jeweils durch die Leitungen passierenden Kornmengen erfassen können.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

## Bezugszeichenliste

| 10 | Sämaschine |
| 12 | Vorratsbehälter |
| 14 | Dosiereinrichtung |
| 16 | Luftstrom |
| 18 | Gebläse |
| 20 | Luftleitung |
| 22 | Steigrohr (Wellrohr) |
| 24 | Zentralverteiler, zentraler Verteiler |
| 26 | körnertragender Luftstrom, körnertragende Luftströmung |
| 28 | Saatleitung |
| 30 | Säschar |
| 32 | Boden, Ackerboden |
| 34 | Dosiervorrichtung |
| 36 | Zuluft, Zuluftströmung |
| 38 | Zuführleitung |
| 40 | Dosieraggregat |
| 42 | Scheibe, Förderscheibe, Fächerscheibe |
| 44 | Ausgangsleitung |
| 46 | austretende Luft (aus Dosiervorrichtung austretende Luft) |
| 48 | Antriebsmotor, elektrischer Antriebsmotor |
| 50 | zentrale Steuerungs- und/oder Regelungseinheit |
| 52 | Drehmoment, Drehmomentwert |
| 54 | Fahrgeschwindigkeit |
| 56 | Sollwerte |
| 58 | Regelvorgaben, Steuerdaten |
| 60 | zusätzliche Sensorwerte |

## Patentansprüche

1. Verfahren zur Dosierung von körnigem Gut wie Samenkörner, Dünger o. dgl., insbesondere innerhalb eines Verteil- oder Säaggregats einer Verteil oder Sämaschine (10), bei dem das durch eine Luftströmung (26) getragene und beförderte körnige Gut durch eine Zuführleitung (38) in ein Dosieraggregat (40) geleitet und dort in einem ungefähr kreisbogenförmigen Verlauf geführt wird, **dadurch gekennzeichnet, dass** anschließend das durch die Luftströmung (26) getragene und beförderte körnige Gut tangential in eine sich an das Dosieraggregat (40) anschließende Ausgangsleitung (44) geleitet wird, wobei die durch die Ausgangsleitung (44) geführte und das annähernd äquidistant beförderte körnige Gut tragende und förderende Luftströmung (46) innerhalb des Dosieraggregats (40) mittels wenigstens einer ungefähr konzentrisch innerhalb des Dosieraggregats (40) rotierenden, elektromotorisch mit regelbarer Drehzahl angetriebenen Förder- oder Fächerscheibe (42) bewegt und/oder umgewälzt wird, und wobei auf Grundlage eines erfassten Drehmoments des elektromotorischen Antriebs (48) der wenigstens einen rotierenden Förder- oder Fächerscheibe (42) die Antriebsdrehzahl erhöht oder reduziert wird.

2. Verfahren nach Anspruch 1, bei dem das Drehmoment des Antriebsmotors (48) aus dessen elektrischer Stromaufnahme abgeleitet wird.

3. Verfahren nach Anspruch 1 oder 2, bei dem auf Grundlage des erfassten Drehmoments des elektromotorischen Antriebs (48) der wenigstens einen rotierenden Förder- oder Fächerscheibe (42) die Antriebsdrehzahl erhöht oder reduziert wird, bis das erfasste Drehmoment innerhalb eines definierbaren Sollbereichs liegt.

4. Verfahren nach Anspruch 1, 2 oder 3, bei dem bei einem erhöhten, oberhalb des Sollbereichs liegenden Drehmoment die Antriebsdrehzahl erhöht wird.

5. Verfahren nach Anspruch 1, 2 oder 3, bei dem bei einem reduzierten, unterhalb des Sollbereichs liegenden Drehmoment die Antriebsdrehzahl reduziert wird.

6. Verfahren nach Anspruch 4 oder 5, bei dem die Drehzahl annähernd kontinuierlich erhöht oder reduziert wird.

7. Verfahren nach Anspruch 4 oder 5, bei dem die Drehzahl in vorgebbaren Sprüngen erhöht oder reduziert wird.

8. Verfahren nach einem der Ansprüche 1 bis 7, bei dem zusätzlich die Sensorwerte eines in der Ausgangsleitung angeordneten Kornflusssensors ausgewertet und für die Regelung der Antriebsdrehzahl verwendet werden.

9. Verfahren nach einem der Ansprüche 1 bis 8, bei dem das annähernd gleichmäßig dosierte und/oder äquidistant beförderte körnige Gut von der das Dosieraggregat (40) weitgehend vollständig durch die Ausgangsleitung (44) verlassenden abgeleiteten Luftströmung (46) getragen wird.

10. Verfahren nach einem der Ansprüche 1 bis 9, bei dem das körnige Gut innerhalb des Dosieraggregats (40) mit mechanischer Unterstützung und/oder unter zumindest teilweiser Separierung von der tragenden Luftströmung an einer Innenmantelfläche oder Innenwandung geführt wird, wobei den sich der Ausgangsleitung (44) nähernden einzelnen Körnern in etwa gleiche Abstände voneinander aufgeprägt werden.

11. Verfahren nach einem der Ansprüche 1 bis 10, bei dem die das körnige Gut tragende Luftströmung (46) ununterbrochen von der Zuführleitung (38), durch das Dosieraggregat (40) und bis zur Ausgangsleitung (44) geführt wird.

12. Verfahren nach einem der Ansprüche 1 bis 11, bei dem die durch die Ausgangsleitung (44) geführte und das annähernd äquidistant beförderte körnige Gut tragende und fördernde Luftströmung (26, 36, 46) innerhalb des Dosieraggregats (40) beschleunigt wird.

13. Verfahren nach einem der Ansprüche 1 bis 12, bei dem die im Dosieraggregat (40) beschleunigte Luftströmung (26, 36, 46) mit einer Geschwindigkeit in die Ausgangsleitung (44) eintritt und aus dieser hinaustritt, die größer ist als eine Zuführgeschwindigkeit, mit der die Luftströmung (26) in die Zuführleitung (38) eintritt.

14. Regelbare Anordnung zur Dosierung von körnigem Gut wie Samenkörner, Dünger o. dgl., insbesondere innerhalb eines Verteil- oder Säaggregats einer Verteil- oder Sämaschine (10), bei dem das durch eine Luftströmung (26, 36) getragene und beförderte körnige Gut durch eine Zuführleitung (38) in ein Dosieraggregat (40) geleitet, und dort in einem ungefähr kreisbogenförmigen Verlauf geführt ist, **dadurch gekennzeichnet, dass** anschließend das durch die Luftströmung (26, 36) getragene und beförderte körnige Gut tangential in eine sich an das Dosieraggregat (40) anschließende Ausgangsleitung (44) geleitet ist, mit wenigstens einer ungefähr konzentrisch innerhalb des Dosieraggregats (40) rotierenden, elektromotorisch mit regelbarer Drehzahl angetriebenen Förder- oder Fächerscheibe (42) zur Bewegung und/oder Umwälzung der durch die Ausgangsleitung (44) geführten und das annähernd äquidistant beförderte körnige Gut tragenden und fördernden Luftströmung (36, 46) innerhalb des Dosieraggregats (40), und mit Einrichtungen zur Erfassung eines Drehmoments des elektromotorischen Antriebs (48) für die wenigstens eine rotierende Förder- oder Fächerscheibe (42) und zur Variation der Antriebsdrehzahl bei einem erfassten Drehmoment, das außerhalb eines definierbaren Sollbereichs liegt.

15. Anordnung nach Anspruch 14, mit Einrichtungen zur Erfassung von Sensorwerten wenigstens eines in der Ausgangsleitung (44) angeordneten Kornflusssensors und zur Auswertung für die Regelung der Antriebsdrehzahl.

16. Sä- oder Ausbringvorrichtung (10) für körniges Gut bzw. Saatgut mit einer Mehrzahl oder Vielzahl von nebeneinander befindlichen Reihen oder Säreihen mit jeweils einem Säaggregat und/oder einer Säschar (30) o. dgl. Vorrichtung zum Einbringen der Körner oder des Saatgutes in eine definierbare Ablagetiefe im Ackerboden (32), welche Säaggregate und/oder Säschare (30) über jeweils separate Zuführleitungen (28) von wenigstens einem Kornvorratsbehälter (12) mit Körnern oder Saatgut versorgt werden, wobei jedes dieser Säaggregate und/oder Säschar (30) mit jeweils einer regelbaren Anordnung zur Dosierung von körnigem Gut gemäß Anspruch 14 oder 15 ausgestattet ist, **dadurch gekennzeichnet, dass** diese regelbaren Anordnungen jeweils signaltechnisch mit einer zentralen Steuerungs- und/oder Regelungseinheit (50) verbunden sind, welche die in den Dosiervorrichtungen (34) erfassten Motordrehmomente (52) verarbeitet, und welche die Kornabstände für jedes Säaggregats durch Variation der Antriebsdrehzahlen der Antriebe (48) unter Berücksichtigung von Sollwerten (58) für die Kornabstände und/oder einer Längsverteilung der Körner einzelner, mehrerer oder aller Säaggregate regelt.

17. Sä- oder Ausbringvorrichtung nach Anspruch 16, bei der Korndurchflusssensoren in den Ausgangsleitungen (44) angeordnet sind, die signaltechnisch mit der Steuerungs- und/oder Regelungseinheit (50) verbunden sind, welche die Sensorwerte (60) der Korndurchflusssensoren zusätzlich im Hinblick auf eine Regelung der Kornabstände bzw. der Längsverteilung der Körner berücksichtigt.

**Claims**

1. A method for metering granular material, such as seeds, fertilizer, or the like, in particular within a distribution unit or sowing unit of a distribution machine or sowing machine (10), in which the granular material being carried and conveyed by an airflow (26) is directed through a feed line (38) into a metering unit (40), and guided therein along an approximately circular arc path, **characterized in that** the granular material being carried and conveyed by an airflow (26) subsequently tangentially directed into an outlet tube (44), the outlet tube being arranged subsequent to the metering unit (40), wherein the airflow (46) being guided through the outlet tube (44) and carrying and conveying the granular material, which is being conveyed in approximately equal spacing, is moved or circulated within the metering unit (40) by means of at least one conveyor disk or fan disk (42), which is electromotively driven at a regulatable rotational speed and which rotates approximately concentrically within the metering unit (40), and wherein the drive speed is increased or reduced on the basis of a detected torque of the electromotive drive (48) for the at least one rotating conveyor disk or fan disk (42).

2. The method as recited in claim 1, in which the torque of the drive motor (48) is derived from its electrical current consumption.

3. The method as recited in claim 1 or 2, in which the drive speed is increased or reduced, based on a detected torque of the electromotive drive (48) of the at least one rotating conveyor disk or fan disk (42), until the detected torque is within a definable target range.

4. The method as recited in claim 1, 2 or 3, in which the drive speed is increased in the instance of a torque that is increased above the target range.

5. The method as recited in claim 1, 2 or 3, in which the drive speed is reduced in the instance of a torque that is reduced below the target range.

6. The method as recited in claim 4 or 5, in which the rotational speed is approximately continuously increased or reduced.

7. The method as recited in claim 4 or 5, in which the rotational speed is increased or reduced at pre-definable intervals.

8. The method as recited in one of the claims 1 to 7, in which the sensor values of a grain flow sensor arranged in the outlet tube are additionally analyzed and used for the regulation of the drive speed.

9. The method as recited in one of the claims 1 to 8, in which the approximately evenly metered and/or equally spaced and conveyed granular material is carried largely or completely by the airflow (46) being discharged and exiting the metering unit (40) through the outlet tube (44).

10. The method as recited in one of the claims 1 to 9, in which the granular material is guided within the metering unit (40) with mechanical support and/or under at least partial separation from the carrying airflow along an inner cover surface or inner wall, wherein approximately equal spacing from one another is imposed on the individual grains approaching the outlet tube (44).

11. The method as recited in one of the claims 1 to 10, in which the airflow (46) carrying the granular material is guided uninterruptedly from the feed tube (38), through the metering unit (40), and to the outlet tube (44).

12. The method as recited in one of the claims 1 to 11, in which the airflow (26, 36, 46) being guided through the outlet tube (44) and carrying and conveying the granular material, which is being conveyed in approximately equal spacing, is accelerated within the metering unit (40).

13. The method as recited in one of the claims 1 to 12, in which the airflow (26, 36, 46) which is accelerated in the metering unit (40) enters into and exits from the outlet tube (44) at a speed that is greater than a feed speed at which the airflow (26) enters into the feed tube (38).

14. A regulatable arrangement for metering granular material, such as seeds, fertilizer, or the like, in particular within a distribution unit or sowing unit of a distribution machine or sowing machine (10), in which the granular material being carried and conveyed by an airflow (26, 36) is directed through a feed line (38) into a metering unit (40), and guided therein along an approximately circular arc path, **characterized in that** subsequently the granular material being carried and conveyed by an airflow (26, 36) is tangentially directed into an outlet tube (44), the outlet tube being arranged subsequent to the metering unit (40), with at least one conveyor disk or fan disk (42), which is electromotively driven at a regulatable rotational speed and which rotates approximately concentrically within the metering unit (40), for the movement and/or circulation within the metering unit (40) of the airflow (36, 46) being guided through the outlet tube (44) and carrying and conveying the granular material, which is being conveyed in approximately equal spacing, and with devices for detecting a torque of the electromotive drive (48) for the at least one rotating conveyor disk or fan disk (42) and for varying the drive speed if a detected torque is outside of a definable target range.

15. The arrangement as recited in claim 14 with devices for the detection of sensor values of at least one grain flow sensor arranged in the outlet tube (44) and for the evaluation of the regulation of the drive speed.

16. A sowing apparatus or spreading apparatus (10) for granular material or seeds, respectively, with a plurality or multitude of rows or seed rows located next to each other, each with a sowing unit and/or seed drill coulter (30) or a similar apparatus for placing the grains or the seeds into the soil (32) at a definable placement depth, which sowing units and/or seed drill coulters (30) are supplied with grains or seeds from at least one grain storage hopper (12) via respectively separate feed tubes (28), wherein each of these sowing units and/or seed drill coulters (30) is equipped with respectively one regulatable arrangement for metering granular material as recited in claim 14 or 15, **characterized in that** these regulatable arrangements are respectively connected, in terms of signal technology, with a central control unit and/or regulating unit (50), which processes the motor torques (52) measured in the metering units (34), and which regulates the grain distances for each sowing unit by varying the drive speeds of the drives (48) under consideration of target values (58) for the grain spacing and/or of a longitudinal distribution of the grains from single, multiple, or all sowing units.

17. The sowing apparatus or spreading apparatus as recited in claim 16, in which grain flow rate sensors are arranged in the outlet tubes (44), which grain flow rate sensors are connected, in terms of signal technology, with the control unit and/or regulating unit (50), which additionally takes into account the sensor values (60) of the grain flow rate sensors with regard to regulating grain spacing or the longitudinal distribution of the grains, respectively.

## Revendications

1. Procédé de dosage de matières granulaires telles que graines, engrais ou similaires, en particulier à l'intérieur d'un groupe de distribution ou à semer d'un(e) machine de distribution ou semoir (10), dans lequel les matières granulaires portées et transportées par un courant d'air (26) sont acheminées à travers une conduite d'amenée (38) dans un groupe de dosage (40) où elles sont guidées suivant une allure à peu près en arc de cercle, **caractérisé par le fait que**, ensuite, les matières granulaires portées et transportées par le courant d'air (26) sont acheminées de manière tangentielle dans une conduite de sortie (44) qui suit le groupe de dosage (40), dans lequel le courant d'air (46) acheminé à travers ladite conduite de sortie (44) et portant et transportant les matières granulaires transportées de manière approximativement équidistante est déplacé et/ou circulé, à l'intérieur du groupe de dosage (40), au moyen d'au moins un disque transporteur ou en éventail (42) tournant de manière à peu près concentrique à l'intérieur du groupe de dosage (40) et entraîné par électromoteur à une vitesse de rotation réglable, et dans lequel la vitesse de rotation d'entraînement est augmentée ou réduite sur la base d'un couple détecté de l'entraînement à électromoteur (48) dudit au moins un disque transporteur ou en éventail (42) tournant.

2. Procédé selon la revendication 1, dans lequel le couple du moteur d'entraînement (48) est déduit de la consommation de courant électrique de celui-ci.

3. Procédé selon la revendication 1 ou 2, dans lequel la vitesse de rotation d'entraînement est augmentée ou réduite sur la base du couple détecté de l'entraînement à électromoteur (48) dudit au moins un disque transporteur ou en éventail (42) tournant, jusqu'à ce que le couple détecté se situe à l'intérieur d'une plage de consigne définissable.

4. Procédé selon la revendication 1, 2 ou 3, dans lequel, dans le cas d'un couple augmenté qui est supérieur à la plage de consigne, la vitesse de rotation d'entraînement est augmentée.

5. Procédé selon la revendication 1, 2 ou 3, dans lequel, dans le cas d'un couple réduit qui est inférieur à la plage de consigne, la vitesse de rotation d'entraînement est réduite.

6. Procédé selon la revendication 4 ou 5, dans lequel la vitesse de rotation est augmentée ou réduite de manière approximativement continue.

7. Procédé selon la revendication 4 ou 5, dans lequel la vitesse de rotation est augmentée ou réduite par sauts prédéterminables.

8. Procédé selon l'une quelconque des revendications 1 à 7, dans lequel, en sus, les valeurs de capteur d'un capteur de flux de grains disposé dans ladite conduite de sortie sont évaluées et utilisées pour le réglage de la vitesse de rotation d'entraînement.

9. Procédé selon l'une quelconque des revendications 1 à 8, dans lequel les matières granulaires dosées de manière approximativement régulière et/ou transportées de manière approximativement équidistante sont portées par le courant d'air (46) évacué quittant le groupe de dosage (40) dans une large mesure complètement par la conduite de sortie (44).

10. Procédé selon l'une quelconque des revendications 1 à 9, dans lequel, à l'intérieur du groupe de dosage (40), les matières granulaires sont guidées en étant supportées mécaniquement et/ou en étant séparées au moins partiellement, par le courant d'air portant, sur une surface latérale intérieure ou paroi intérieure, des distances à peu près égales étant imposées aux grains individuels s'approchant de la conduite de sortie (44).

11. Procédé selon l'une quelconque des revendications 1 à 10, dans lequel le courant d'air (46) portant les matières granulaires est mené de manière ininterrompue depuis la conduite d'amenée (38) jusqu'à la conduite de sortie (44) en passant par le groupe de dosage (40).

12. Procédé selon l'une quelconque des revendications 1 à 11, dans lequel le courant d'air (26, 36, 46) acheminé à travers la conduite de sortie (44) et portant et transportant les matières granulaires transportées de manière approximativement équidistante est accéléré à l'intérieur du groupe de dosage (40).

13. Procédé selon l'une quelconque des revendications 1 à 12, dans lequel le courant d'air (26, 36, 46) accéléré dans le groupe de dosage (40) entre dans la conduite de sortie (44) et sort de celle-ci à une vitesse qui est supérieure à une vitesse d'amenée à laquelle le courant d'air (26) entre dans la conduite d'amenée (38).

14. Ensemble réglable destiné au dosage de matières granulaires telles que graines, engrais ou similaires, en particulier à l'intérieur d'un groupe de distribution ou à semer d'un(e) machine de distribution ou semoir (10), dans lequel les matières granulaires portées et transportées par un courant d'air (26, 36) sont acheminées à travers une conduite d'amenée (38) dans un groupe de dosage (40) où elles sont guidées suivant une allure à peu près en arc de cercle, **caractérisé par le fait que**, ensuite, les matières granulaires portées et transportées par le courant d'air (26, 36) sont acheminées de manière tangentielle dans une conduite de sortie (44) qui suit le groupe de dosage (40), comprenant au moins un disque transporteur ou en éventail (42) qui tourne de manière à peu près concentrique à l'intérieur du groupe de dosage (40) et est entraîné par électromoteur à une vitesse de rotation réglable et qui est destiné à déplacer et/ou à faire circuler, à l'intérieur du groupe de dosage (40), le courant d'air (36, 46) acheminé à travers la conduite de sortie (44) et portant et transportant les matières granulaires transportées de manière approximativement équidistante, ainsi que des dispositifs destinés à détecter un couple de l'entraînement à électromoteur (48) pour ledit au moins un disque transporteur ou en éventail (42) tournant et à faire varier la vitesse de rotation d'entraînement en cas de détection d'un couple qui se situe hors d'une plage de consigne définissable.

15. Ensemble selon la revendication 14, comprenant des dispositifs destinés à la détection de valeurs de capteur d'au moins un capteur de flux de grains disposé dans ladite conduite de sortie (44) et à l'évaluation pour le réglage de la vitesse de rotation d'entraînement.

16. Dispositif à semer ou à épandre (10) pour des matières granulaires ou bien semences, comprenant une pluralité ou multitude de rangées ou rangées à semer situées les unes à côté des autres, comprenant respectivement un groupe à semer et/ou un soc semeur (30) ou dispositif similaire destiné à introduire les grains ou les semences dans une profondeur de mise en place définissable dans la terre arable (32), lesdits groupes à semer et/ou socs semeurs (30) étant alimentés en grains ou semences via des conduites d'amenée (28) respectivement séparées, à partir d'au moins un réservoir de grains (12), dans lequel chacun de ces groupes à semer et/ou socs semeurs (30) est équipé de respectivement un ensemble réglable destiné au dosage de matières granulaires selon la revendication 14 ou 15, **caractérisé par le fait que** ces ensembles réglables sont reliés chacun, en matière de signaux, à une unité centrale de commande et/ou de réglage (50) qui traite les couples moteurs (52) détectés dans les dispositifs de dosage (34) et qui règle les distances entre grains pour chaque groupe à semer par une variation des vitesses de rotation d'entraînement des mécanismes d'entraînement (48) en prenant en compte des valeurs de consigne (58) pour les distances entre grains et/ou une répartition longitudinale des grains de groupes à semer particuliers, de plusieurs ou de l'ensemble des groupes à semer.

17. Dispositif à semer ou à épandre selon la revendication 16, dans lequel des capteurs de débit de grains sont disposés dans les conduites de sortie (44), qui sont connectés en matière de signaux à l'unité de commande et/ou de réglage (50) qui prend en compte les valeurs de capteur (60) des capteurs de débit de grains en sus en vue d'un réglage des distances entre grains ou bien de la répartition longitudinale des grains.

# Fig. 1

# Fig. 2

$$P = U \bullet I$$

Fig. 3

**EP 2 988 586 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1234489 A2
- WO 2012167372 A1
- US 6564730 B2
- EP 0963690 A1